# EUROPEAN PATENT APPLICATION

(11) **EP 2 077 642 A1**
(43) Date of publication of application: **08.07.2009**
(21) Application number: 07817154.3
(22) Date of filing: 26.10.2007
(51) Int. Cl.: H04L 7/00

(54) **A METHOD, SYSTEM AND TIME SERVER FOR ADJUSTING NETWORK TIME**

(30) Priority: 27.10.2006 CN 200610149859
(71) Applicant: Huawei Technologies Co., Ltd., Longgang District, Shenzhen Guangdong 518129 (CN)
(72) Inventor: HONG, Zhi, Shenzhen Guangdong 518129 (CN)
(74) Representative: Gulde Hengelhaupt Ziebig & Schneider
(86) International application number: PCT/CN2007/070963
(87) International publication number: WO 2008/052469

(57) **Abstract**

A method for adjusting network time is provided according to the present disclosure. The method includes acquiring, by a first level time server, a time delay in a transmission network and sending the time to a second level time server; adjusting the time of the second level time server to a Coordinated Universal Time according to the received time delay in the transmission network. A system for adjusting network time is provided according to the present disclosure. The system includes an acquisition unit and an adjusting unit.

## Description

### FIELD OF THE INVENTION

The present disclosure relates to communication field, in particular, to methods, systems and time servers for adjusting network time.

### BACKGROUND

Because the communication technology develops constantly and the client requirement for time synchronization becomes more and more demanding, the time synchronization technology keeps progressing, and more and more applications of this technology are found in the communication network. The time synchronization technology refers to passing the time information to various devices which require time synchronization along inter-office/intra-office time distribution links after acquiring a Coordinated Universal Time (UTC) from a time source (e.g., Global Positioning System).

According to world wide practice, currently, prevailing means for passing time signal include methods of IRIG-B (Inter Range Instrumentation Group), DCLS (DC Lever Shift), NTP (Network Time Protocol), 1PPS (1 Pulse Per Second) and serial ASCII character strings, etc.

The IRIG-B utilizes a sine wave of 1KHz as a carrier frequency to modulate the amplitude so as to encode the latest 1 second. The contents in the frame of IRIG-G include year, day, time, minute, second, and control information, etc. The widest bandwidth it takes up is 3KHz. Therefore, the frame can be transmitted in a building using a common twisted pair wires or transmitted by an analog telephone network over a long distance. The DCLS is another transmission code pattern of IRIG-B, with its symbol information carried in a direct potential, which is equal to the envelop of the IRIG-B modulating code. IRIG-DCLS technology may be borne in a transmission network via a leased line for a long distance transmission.

Currently, DCLS or NTP is typically employed to transmit the time signal over a long distance. As an Internet Protocol (IP)-based network time protocol, the NTP is subject to network traffic, routing, etc. The extent of precision is only at a millisecond level. Only the DCLS manner can be borne in the transmission network for transmitting time signal over a long distance and at the same time keeps the precision accurate to nanosecond level. Therefore, DCLS bearing technique is a mainstream technique for transmitting time over a long distance with high precision in the transmission network.

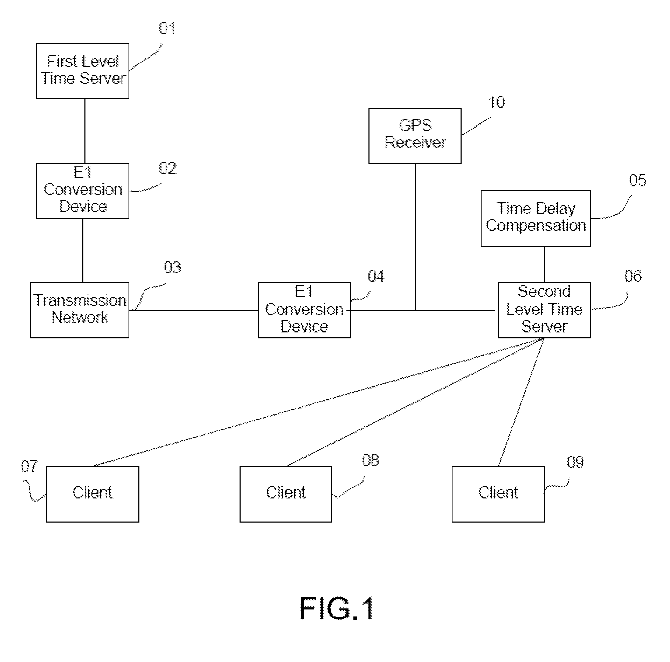

Figure 1 illustrates a conventional method for handling the network delay. A first level time server 01 acquires a time signal from the GPS and outputs the DCLS time signal to a second level time server 06. The second level time server 06 provides time synchronization service for various clients 07-09. To pass DCLS time signal to the second level time server over a long distance, the DCLS signal may be converted by an E1 conversion device 02 and inserted in a 64K time slot of E1 for transmission. Then, the E1 is multiplexed with the N-order synchronization transmission module via a transmission device in the transmission network 03 to carry out transmission. When the signal reaches a E1 conversion device 04 of the second level time server side, the E1 conversion device 04 reverts the received signal to DCLS signal and the E1 passes the reverted DCLS signal to the second level time server 06.

Because a signal may be delayed during network transmission, the specialized people have to bring lots of equipments such as GPS receiver 10 to the field to eliminate such transmission delay. By comparing the DCLS time signal distributed from the UTC acquired by the GPS receiver 10 with the DCLS time signal obtained from the network transmission, the time delay in network transmission can be measured. Then, time delay compensation software 05 may be used to adjust the DCLS time so as to eliminate the delay due to the network transmission.

According to the existing usage, the specialized people have to bring lots of equipments to the field, and the antenna of the receiver has to be placed outside the window or at the attic. However, the machine room operating the telecommunication equipments does not allow placing the antenna at the attic or outside the window, which causing inconvenience in maintenance.

Moreover, the cost for manual adjustment is expensive, which becomes a big headache for operators and OEMs.

Even if the foregoing reason is not taken into consideration, the compensation for the time delay requires the involvement of the specialized people. Therefore, the requirement for network time adjustment is more demanding. Moreover, because the manual adjustment is just for one time, when a change in the state of the transmission network (e.g., transmission device switches, the transmission time delay varies with the transmission path) causes a change in the compensation for the transmission time delay, and then the previous manual adjustment is no longer accurate. Compensation for time delay needs to be performed once again at the field.

### SUMMARY

The problem to be solved is the adjustment of time delay in the transmission network. According to the methods and systems of the present disclosure, a second level time server may calibrate the time signal without external equipment. In addition, an automatic measurement for the transmission time delay is performed and an automatic compensation is performed when the time delay in the transmission network changes. Accordingly, the problem of the inconvenient maintenance that the specialized people have to bring lots of equipments to the field for time adjustment, a high cost in maintenance, one-time calibration, etc., can be solved.

To solve the foregoing problem, technical solutions are presented below according to the present disclosure.

A method for adjusting network time is provided. The method includes:
acquiring, by a first level time server, a time delay in a transmission network and sending a standard time containing the time delay in the transmission network to a second level time server; and
adjusting, by the second level time server, the time of the second level time server to the standard time based on the received time delay in the transmission network.

A system for adjusting network time is provided. The system includes:
an acquisition unit, configured to acquire a delay time in a transmission network and send a standard time containing the delay time in the transmission network to an adjusting unit;
an adjusting unit, configured to receive the delay time in the transmission network and adjust its time to the standard time based on the received time delay in the transmission network.

A time server is provided. The time server includes an acquisition unit, configured to acquire a standard time from a global positioning system and a time delay in a transmission network, and send the standard time containing the time delay in the transmission network to a next level time server for calibrating the time of the next level time server to the standard time.

A time server is provided. The time server includes an adjusting unit, configured to receive from a previous level time server a standard time containing the time delay in the transmission network, and adjust its time to the standard time according to the received time delay in the transmission network.

As can be seen from the above technical solutions, according to the present disclosure, the time delay in transmission network is carried in the transmission network for long distance transmission. The second level time server is able to carry out an automatic time delay compensation and to adjust the time of the network by virtue of the acquired time delay in transmission network. Accordingly, the specialized people do not have to bring lots of equipments such as GPS receivers to the field, thus the problem of inconvenient maintenance can be solved.

### BRIEF DESCRIPTION OF THE DRAWING(S)

Figure 1 illustrates an implementation of transmitting a network time according to the prior art;

Figure 2 illustrates a flowchart for transmitting a network time according to the present disclosure;

Figure 3 illustrates an implementation for transmitting a network time according to the present disclosure;

Figure 4 illustrates a wave form of a frame structure; and

Figure 5 illustrates a system for transmitting a network time according to the present disclosure.

### DETAILED DESCRIPTION

A method for adjusting network time is provided according to the present disclosure. According to the method and the system, a second level time server is able to calibrate the DCLS time signal without external equipment and may also carry out an automatic measurement and compensation of transmission time delay when the delay in the transmission network changes.

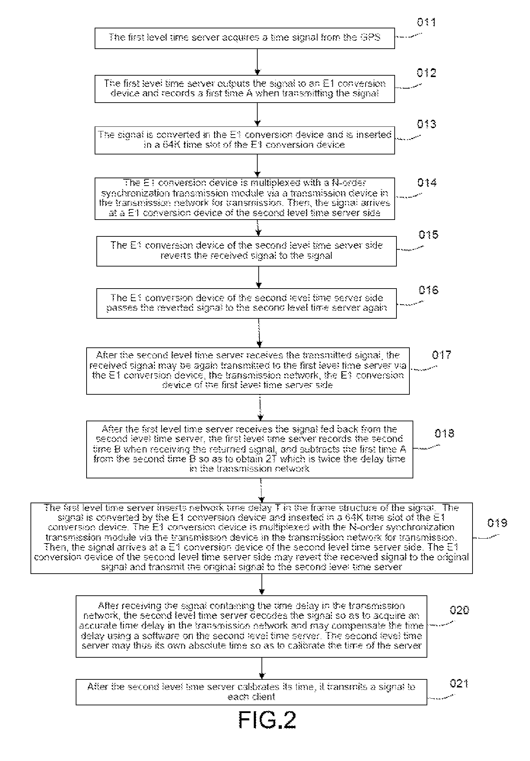

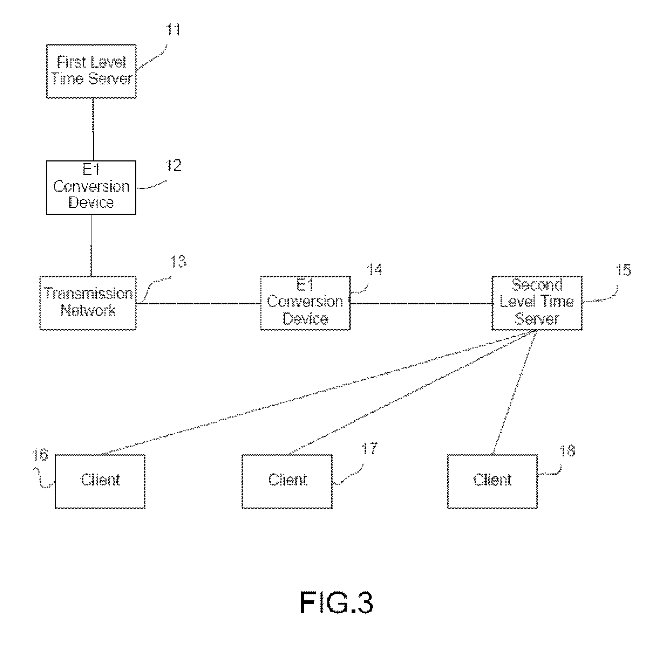

Detailed implementations are illustrated in Figure 2 and Figure 3.

Step 011: The first level time server 11 acquires a time signal from the GPS.

Step 012: A first level time server 11 outputs the DCLS signal to an E1 conversion device 12 and records a first time A when transmitting the DCLS signal.

Step 013: The DCLS signal is converted in the E1 conversion device 12 and is inserted in a 64K time slot of the E1 conversion device 12.

Step 014: The E1 conversion device 12 is multiplexed with an N-order synchronization transmission module via a transmission device in the transmission network 13 for transmission. Then, the signal arrives at an E1 conversion device 14 of the second level time server side.

Step 015: The E1 conversion device 14 of the second level time server side reverts the received signal to DCLS signal.

Step 016: The E1 conversion device 14 of the second level time server side passes the reverted DCLS signal to the second level time server 15.

The above steps 011 to 016 are roughly the same as those in the prior art, except that the first level time server 11 records the time when transmitting the DCLS signal. Starting from step 017, instead of manually setting up the GPS receiver to acquire the Coordinated Universal Time to adjust the time of the second level time server 15, the time delay in transmission network is obtained by interaction between the second level time server 15 and the first level time server 11 and the time delay is then calculated by the first level time server 11.

Step 017: After the second level time server 15 receives the transmitted DCLS signal, the received DCLS signal may be again converted by the E1 conversion device 14 and inserted in a 64K time slot of the E1 conversion device 14. The E1 conversion device 14 is multiplexed with the N-order synchronization transmission module via the transmission device in the transmission network 13 for transmission. Then, the signal arrives at a E1 conversion device 12 of the first level time server side. The E1 conversion device 12 of the first level time server side may revert the received signal to the original signal and transmit the original signal to the first level time server 11.

Step 018: After the first level time server 11 receives the DCLS signal fed back from the second level time server 15, the first level time server records the second time B when receiving the returned DCLS signal, and subtracts the first time A from the second time B so as to obtain 2T which is twice the delay time in the transmission network.

The rationale of obtaining twice the delay time in the transmission network can be explained as follows.

Suppose the time delay in transmission network is T. A time delay T is generated after the DCLS signal is transmitted from the first level time server 11 to the second level time server 15. When the second level time server 15 feeds back the DCLS signal to the first level time server, another time delay T is generated after the feedback DCLS signal arrives at the first level time server 11. Therefore, the first level time server 11 receives the DCLS signal fed back from the second level time server 15 after a time delay 2T in the transmission network.

Another situation is that: Suppose the time delay in transmission network is T. A time delay T' is generated after the DCLS signal is transmitted from the first level time server 11 to the second level time server 15. When the second level time server 15 feeds back the DCLS signal to the first level time server 11, a time delay T" is generated after the feedback DCLS signal arrives at the first level time server 11. In fact, the first level time server 11 receives the DCLS signal fed back from the second level time server 15 after a time delay T'+T" in the transmission network. Then, the time delay in the transmission network can be regarded as T=(T'+T") /2.

Step 019: After the first level time server inserts network time delay T in the frame structure of the DCLS signal. The DCLS signal is converted by the E1 conversion device 12 and inserted in a 64K time slot of the E1 conversion device 12. The E1 conversion device 12 is multiplexed with the N-order synchronization transmission module via the transmission device in the transmission network 13 for transmission. Then, the signal arrives at an E1 conversion device 14 of the second level time server side. The E1 conversion device 14 of the second level time server side may revert the received signal to the original signal and transmit the original signal to the second level time server 12.

In this step, the method of inserting the network time delay T in the frame structure of the DCLS signal is described below.

The network time delay T is inserted in the frame structure of the DCLS signal in the form of binary code, and then transmitted to the second level time server 15. Because each frame structure of the DCLS signal provides 27-bit control bits which have no specific usage at present, such 27 bits can be utilized to transmit the time delay and the time day can be coded in the form of second, millisecond, microsecond. Because at most 27 bits can be used, coding can be accurate to 1 microsecond in 127s.

For instance, Table One illustrates a control frame structure of DCLS signal with the precision of 1 microsecond.

**Table One**

| Control Frame Structure ( 27 BITS ) | | | | | |
|---|---|---|---|---|---|
| BITS Control Bit | BIT Time | BITS Control Bit | BIT Time | BITS Control Bit | BIT Time |
| 1 | Pr + 500ms | 10 | Pr + 600ms | 19 | Pr + 700ms |
| 2 | Pr + 510ms | 11 | Pr + 610ms | 20 | Pr + 710ms |
| 3 | Pr + 520ms | 12 | Pr + 620ms | 21 | Pr + 720ms |
| 4 | Pr + 530ms | 13 | Pr + 630ms | 22 | Pr + 730ms |
| 5 | Pr + 540ms | 14 | Pr + 640ms | 23 | Pr + 740ms |
| 6 | Pr + 550ms | 15 | Pr + 650ms | 24 | Pr + 750ms |
| 7 | Pr + 560ms | 16 | Pr + 660ms | 25 | Pr + 760ms |
| 8 | Pr + 570ms | 17 | Pr + 670ms | 26 | Pr + 770ms |
| 9 | Pr + 580ms | 18 | Pr + 680ms | 27 | Pr + 780ms |
| Identification Bit(P6) | Pr + 590ms | Identification Bit(P7) | Pr + 690ms | Identification Bit(P8) | Pr + 790ms |

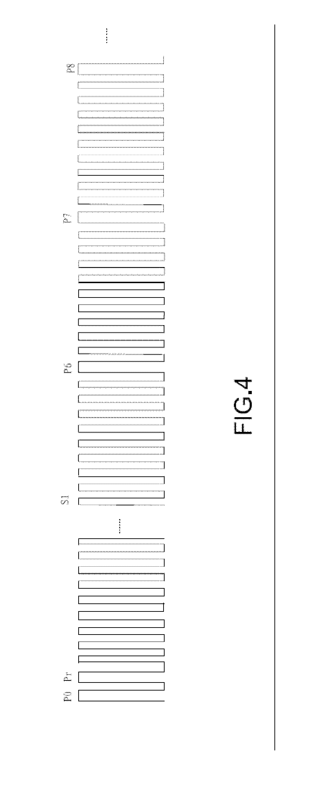

In the above table, Pr is a start sign bit indicative the start of a frame. Figure 4 illustrates a wave form of a frame. The P0 is a first identification bit, Pr is a starting sign bit of the frame. The time length is calculated from Pr. A next BIT control bit is used for time delay of every 10 milliseconds. P6 is the seventh identification bit, P7 is the eighth identification bit and P8 is the ninth identification bit. Because a next BIT control bit is used every 10 ms, the time interval between two neighboring identification bits spans 100ms. Therefore, when starting from Pr, the first bit in Table One corresponds to S1 in Figure 4, i.e., a time interval of P5+500ms. P6 (the seventh identification bit) corresponds to a time interval of 600ms, i.e., the BIT time to which P6 corresponds is Pr+590ms. P7 (the eighth identification bit) corresponds to a time interval of 700ms, i.e., the BIT time to which P7 corresponds is Pr+690ms. P8 (the ninth identification bit) corresponds to a time interval of 800ms, i.e., the BIT time to which P8 corresponds is Pr+790ms.

1^{st} to 10^{th} bit are used to denote microsecond.

11^{st} to 20^{th} bit are used to denote millisecond.

21^{st} to 27^{th} bit are used to denote second.

If the time delay T in transmission network is 10 milliseconds, 27bit binary codes for 10 milliseconds is represented as (us)0000000000(ms)0101000000(s)0000000.

Then, the frame structure of DCLS signal inserted with a time delay of 10 ms in the transmission network is shown in Table Two.

**Table Two**

| Control Frame Structure ( 27 BITS ) | | | | | |
|---|---|---|---|---|---|
| BITS Control Bit | BIT Time | BITS Control Bit | BIT Time | BITS Control Bit | BIT Time |
| 0 | Pr + 500ms | 0 | Pr + 600ms | 0 | Pr + 700ms |
| 0 | Pr + 510ms | 1 | Pr + 610ms | 0 | Pr + 710ms |
| 0 | Pr + 520ms | 0 | Pr + 620ms | 0 | Pr + 720ms |
| 0 | Pr + 530ms | 1 | Pr + 630ms | 0 | Pr + 730ms |
| 0 | Pr + 540ms | 0 | Pr + 640ms | 0 | Pr + 740ms |
| 0 | Pr + 550ms | 0 | Pr + 650ms | 0 | Pr + 750ms |
| 0 | Pr + 560ms | 0 | Pr + 660ms | 0 | Pr + 760ms |
| 0 | Pr + 570ms | 0 | Pr + 670ms | 0 | Pr + 770ms |
| 0 | Pr + 580ms | 0 | Pr + 680ms | 0 | Pr + 780ms |
| Identification Bit ( P6 ) | Pr + 590ms | Identification Bit ( P7 ) | Pr + 690ms | Identification Bit ( P8 ) | Pr + 790ms |

The foregoing presents a method for coding the time delay in a binary format and inserting the codes to the frame structure of the DCLS signal for transmission. However, the method is not limited to binary coding, other forms of coding can be contemplated for transmission.

Step 020: After receiving the DCLS signal containing the time delay in the transmission network, the second level time server decodes the DCLS signal so as to acquire an accurate time delay in the transmission network and may compensate the time delay using a software on the second level time server. The second level time server may thus adjust the position of its own absolute time of the DCLS frame so as to calibrate the time of the server.

Step 021: After the second level time server 15 calibrates its time, it transmits a DCLS signal to each client 16-18.

Specifically, suppose the time A when the first level time server 11 transmits the DCLS signal to the second level time server is 15hr: 31min:20s:10ms. The second level time server 15 receives the DCLS signal and then feedbacks the DCLS signal to the first level time server 11. The time B when the first level time server 11 receives the DCLS signal is 15hr:31min:20s:30ms. Then, the difference C between time B and time A is 20ms. At this point, C is twice the time of delay in transmission network. Therefore, the time delay in the transmission network is 10ms. The first level time server 11 again inserts the network time delay of 10 ms into the frame structure of the DCLS signal as illustrated in Table Two., and then sends the DCLS signal to the second level time server 15. After the second level time server 15 receives the signal, an accurate time delay in transmission network can be acquired by decoding the control frame in the DCLS signal transmitted by the first level time server 11. After compensated with the software, the time of the server side can be calibrated.

Because the transmission network and the transmission paths are stable in normal condition, the time delay may remain unchanged except when the transmission network switches or the transmission paths varies. Therefore, there is no need to calibrate the time of the second level time server frequently. According to the present disclosure, the first level time server 11 periodically transmits a DCLS signal to the second level time server 15. The time period can be set as 1 s or set as required.

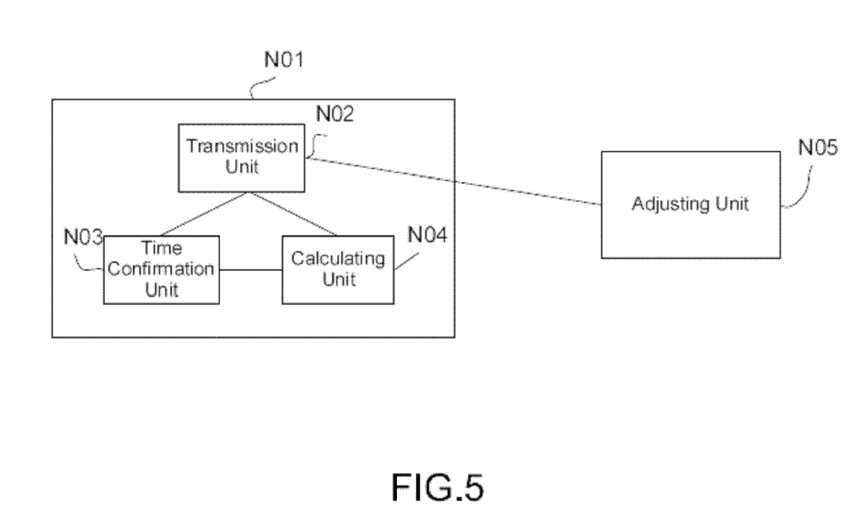

The foregoing method may be implemented in a corresponding system for adjusting network time delay. As illustrated in Figure 5, the system includes an acquisition unit N01, and an adjusting unit N05.

The acquisition unit N01 is configured to acquire the time delay in the transmission network and send the time to the adjusting unit N05.

The adjusting unit N05 is configured to receive the time delay in the transmission network and adjust its own time to the Coordinated Universal Time in accordance with the time.

The acquisition unit N01 further includes a transmission unit N02, a time confirmation unit N03, and a calculating unit N04.

The transmission unit N02 is configured to receive or send a signal.

The time confirmation unit N03 is configured to record a first time of transmitting the signal when the transmission unit N02 sends the signal, and to confirm a second time of receiving the signal when the transmission unit N02 receives the signal.

The calculating unit N04 is configured to subtract the first time from the second time recorded by the time confirmation unit N03 so as to obtain twice the time of delay in the transmission network. And the calculating unit N04 is further configured to insert the time delay in the transmission network into the signal in the form of binary codes. Moreover, the time delay in the transmission network can be accurate to microsecond. The calculating unit N04 is further configured to instruct the transmission unit N02 to transmit the time delay in the transmission network to the adjusting unit N05.

As can be seen from the above technical solution, according to the present disclosure, the time delay in transmission network is carried in the transmission network for long distance transmission. The second level time server is able to carry out an automatic time delay compensation and to adjust the time of the network by virtue of the acquired time delay in transmission network. Accordingly, the specialized people do not have to bring lots of equipments such as GPS receivers to the field, thus the problem of inconvenient maintenance can be solved.

Further, according to the present disclosure, with several times of interactions for time information between the first level time server and the second level time server, the first level time server is able to calculate the accurate time delay in the transmission network. Additionally, the time delay in the transmission network can still be calculated accurately with this method when the transmission network switches or the transmission path changes. The second level time server is able to automatically compensate the time difference with the time delay automatically measured by the system. Such self-adapted process solves the problem that the specialized people are still needed in the field again for time delay compensation operation when any change occurs in the network according to the prior art.

Because the time delay in the transmission network is calculated by interacting the time information within the system and the second level time server performs the time compensation, specific requirements for the specialized people to adjust the network time can be avoided. By carrying the time delay in the transmission network in the control frame to carry out transmission, the time delay can be accurate to microsecond, thus further ensuring the accuracy of the time delay compensation.

In addition, in normal conditions, the transmission path in the transmission network is fixed, and the time delay is thus fixed. There is no need to perform time compensation for several times. Therefore, a signal is transmitted to the server periodically. For instance, a signal is transmitted every 1 second. As a result, the burden of too much signal transmission and time adjustment to the system can be avoided.

Methods and systems for adjusting network time delay according to the present disclosure are presented above in detail. Several specific exemplary embodiments are made to the present disclosure to illustrate the principle and implementation of the present disclosure. The description of the embodiments is intended merely to facilitate the understanding of the method and ideas of the present disclosure. Further, it is readily appreciated by those skilled in the art that any modification can be made to the specific implementation and application with the present disclosure. Accordingly, the content of the specification shall not be construed as a limitation to the present disclosure.

## Claims

1. A method for adjusting network time, **characterized by** comprising:
acquiring, by a first level time server, a time delay in a transmission network and sending a standard time containing the time delay in the transmission network to a second level time server; and
adjusting, by the second level time server, the time of the second level time server to the standard time based on the received time delay in the transmission network.

2. The method according to claim 1, **characterized in that**, the first level time server utilizes a direct level shift signal to transmit the acquired time delay in the transmission network to the second level time server.

3. The method according to claim 1, **characterized in that,** the step of acquiring the time delay in the transmission network comprises:
transmitting, by the first level time server, a signal to the second level time server and recording a first time of transmitting the signal; and
receiving the signal returned from the second level time server, recording a second time of receiving the signal returned from the second level time server, and subtracting the first time from the second time to obtain twice the time delay in the transmission network.

4. The method according to claim 3, **characterized in that**, the signal transmitted from the first level time server to the second level time server is a direct level shift signal.

5. The method according to claim 1, **characterized in that,** the step of sending by the first level time server the time delay in the transmission network to the second level time server comprises: inserting the time delay in the transmission network into the signal in the form of binary code for transmission.

6. The method according to claim 5, **characterized in that**, the signal inserted with the time delay in the transmission network is an Inter Range Instrumentation Group signal, a direct level shift signal, or a network time protocol signal, a serial port ASCII character string signal.

7. The method according to claim 3 or 4, **characterized in that**, the first level time server sends the signal periodically to the second level time server.

8. The method according to claim 1, **characterized in that,** the standard time is a Coordinated Universal Time.

9. A system for adjusting network time, **characterized by** comprising:
an acquisition unit, configured to acquire a delay time in a transmission network and send a standard time containing the delay time in the transmission network to an adjusting unit;
an adjusting unit, configured to receive the delay time in the transmission network and adjust its time to the standard time based on the received time delay in the transmission network.

10. The system according to claim 9, **characterized in that,** the acquisition unit further comprises:
a transmission unit, configured to receive or send a signal;
a time confirmation unit, configured to record a first time of transmitting the signal when the transmission unit sends the signal, and to confirm a second time of receiving the signal when the transmission unit receives the signal;
a calculation unit, configured to subtract the first time from the second time recorded by the time confirmation unit to obtain twice the time delay in the transmission network, and to inform the transmission unit to send the time delay in the transmission network to the adjusting unit.

11. The system according to claim 9 or 10, **characterized in that,** the transmission unit inserts the time delay in the transmission network into the signal in the form of binary codes for transmission.

12. The system according to claim 11, **characterized in that,** the signal inserted with the time delay in the transmission network is an Inter Range Instrumentation Group signal, a direct level shift signal, or a network time protocol signal, a serial port ASCII character string signal.

13. The system according to claim 9 or 10, **characterized in that**, the time delay in the transmission network transmitted or received by the transmission unit is accurate to microsecond.

14. The system according to claim 13, **characterized in that**, the standard time is a Coordinated Universal Time.

15. A time server, **characterized by** comprising:
an acquisition unit, configured to acquire a standard time from a global positioning system and a time delay in a transmission network, and send the standard time containing the time delay in the transmission network to a next level time server for calibrating the time of the next level time server to the standard time.

16. The time server according to claim 15, **characterized in that,** the standard time is a Coordinated Universal Time.

17. The time server according to claim 15, **characterized in that,** the acquisition unit further comprises:
a transmission unit, configured to receive or send a signal;
a time confirmation unit, configured to record a first time of transmitting the signal when the transmission unit sends the signal, and to confirm a second time of receiving the signal when the transmission unit receives the signal; and
a calculation unit, configured to subtract the first time from the second time recorded by the time confirmation unit to obtain twice the time delay in the transmission network, and to notify the transmission unit to send out the time delay in the transmission network.

18. A time server, **characterized by** comprising:
an adjusting unit, configured to receive from a previous level time server a standard time containing the time delay in the transmission network, and adjust its time to the standard time according to the received time delay in the transmission network.

19. The time server according to claim 18, **characterized in that,** the time server further comprises:
a notification unit, configured to send the adjusted standard time to clients in the network to be synchronized.

20. The time serve according to claim 18, **characterized in that**, the standard time is a Coordinated Universal Time.
